# EUROPEAN PATENT APPLICATION

(11) **EP 0 782 108 A2**
(43) Date of publication of application: **02.07.1997**
(21) Application number: 96120498.9
(22) Date of filing: 19.12.1996
(51) Int. Cl.: G07B 17/00

(54) **A method generating digital tokens from a subset of addressee information**

(30) Priority: 19.12.1995 US 575111
(71) Applicant: PITNEY BOWES INC., Stamford Connecticut 06926-0700 (US)
(72) Inventor: Cordery, Robert A., Danbury, CT 06811 (US); D'Ippolito, Frank M., Derby, CT 06418 (US); Pintsov, Leon A., West Hartford, CT 06117-1900 (US)
(74) Representative: Avery, Stephen John

(57) **Abstract**

A method for generating postage evidence includes providing addressee information separated into a plurality of address fields. A predetermined section of each address field, appropriate for authentication purposes, is selected to obtain selected address data. An error correction code is generated for the selected address data and a secure hash is generated of the selected address data. The secure hash is sent with postal data, including postage amount and date, to a digital token generation process that generates at least one digital token using the secure hash for evidencing postage. An indicia including the digital token and the postal data is generated and then printed on a mail piece with the error correction code and the addressee information. In a digital token verification process, the addressee information and the error correcting code are read from the mailpiece and the postal data is read from the indicia. An error correction algorithm is used to determine if errors are correctable. If correctable, a predetermined section of each address field is selected to obtain selected address data. A secure hash of the selected address data is generated and sent with the postal data to a digital token verification process.

## Description

The present invention relates to advanced postage payment systems and, more particularly, to advanced postage payment systems having pre-computed postage payment information.

The present application is related to the following U.S. Patent Applications Serial Nos. [Attorney Dockets E-415, E-416, E-417, E-418, E-419, E-420, E-421, E-444. E-452 and E-463], each filed concurrently herewith, and assigned to the assignee of the present invention.

Postage metering systems are being developed which employ digital printers to print encrypted information on a mailpiece. Such metering systems are presently categorized by the United States Postal Service as either closed systems or open systems. In a closed system, the system functionality is solely dedicated to metering activity. A closed system metering device includes a dedicated printer securely coupled to a metering or accounting function. In a closed system, since the printer is securely coupled and dedicated to the meter, printing cannot take place without accounting. In an open metering system the system functionality is not dedicated solely to metering activity. An open system metering device includes a printer that is not dedicated to the metering activity, thus freeing system functionality for multiple and diverse uses in addition to the metering activity. An open system metering device is a postage evidencing device (PED) with a non-dedicated printer that is not securely coupled to a secure accounting module.

Typically, the postage value for a mailpiece is encrypted together with other data to generate a digital token which is then used to generate a postage indicia that is printed on the mailpiece. A digital token is encrypted information that authenticates the information imprinted on a mailpiece including postal value. Examples of systems for generating and using digital tokens are described in U.S. Patent No. 4,757,537, 4,831,555, 4,775,246, 4,873,645 and 4,725,718, the entire disclosures of which are hereby incorporated by reference. These systems employ an encryption algorithm to encrypt selected information to generate at least one digital token for each mailpiece. The encryption of the information provides security to prevent altering of the printed information in a manner such that any misuse of the tokens is detectable by appropriate verification procedures.

Typical information which may be encrypted as part of a digital token includes origination postal code, vendor identification, data identifying the PED, piece count, postage amount, date, and, for an open system, destination postal code. These items of information, collectively referred to as Postal Data, when encrypted with a secret key and printed on a mail piece provide a very high level of security which enables the detection of any attempted modification of a postal revenue block or a destination postal code. A postal revenue block is an image printed on a mail piece that includes the digital token used to provide evidence of postage payment. The Postal Data may be printed both in encrypted and unencrypted form in the postal revenue block. Postal Data serves as an input to a Digital Token Transformation which is a cryptographic transformation computation that utilizes a secret key to produce digital tokens. Results of the Digital Token Transformation, i.e., digital tokens, are available only after completion of the Accounting Process.

Digital tokens are utilized in both open and closed metering systems. However, for open metering systems, the non-dedicated printer may be used to print other information in addition to the postal revenue block and may be used in activity other than postage evidencing. In an open system PED, addressee information is included in the Postal Data which is used in the generation of the digital tokens. Such use of the addressee information creates a secure link between the mailpiece and the postal revenue block and allows unambiguous authentication of the mail piece.

Prior open metering system designs use the destination postal code (in U.S.A. this is the 11 digit ZIP code) to identify the address. This approach has several problems. For international mail, the destination postal code may not exist. If one does exist, a mailer may not have access to it. If the mailer guesses an incorrect postal code, the cost of returning and correcting the mail is very high for the postal service. The destination postal code does not identify the recipient of the mail, so mail can be sent fraudulently to several people in the same building.

The present invention resolves the aforementioned difficulties, and in addition provides the postal service with means to improve the rate of correct reading of the delivery address printed on the mailpiece. In this manner, the present invention significantly reduces the cost of processing the mail.

The present invention provides a method of improving the rate of accurate reading of addressee information for use in a token generation and verification process for an open metering system. An open metering system must include delivery address information, such as the 11-digit ZIP code, in the calculation of digital tokens to protect the system from a fraudulent copying of the tokens.

In accordance with the present invention, a message digest or hash of part of the address data is generated in the user's computer and sent to the open system meter to produce digital tokens that include delivery address data. In addition, error correcting code is generated for at least the same part of the delivery address data. The address and the error correcting codes are both printed on the mailpiece. The error correcting code may be printed using characters, or using a barcode representation. The tokens are verified by reading the delivery address data on the envelope and repeating the token generation process. The error correction code is used to help assure correct reading of the data.

It has been discovered that the transformations necessary to generate a message digest and to generate the error correcting codes can be provided in software that can be used in the mailer's computer and does not require a large changing data base. The method of the present invention provides security that prevents tampering and false evidence of postage payment and provides the ability to do batch processing of digital tokens.

In accordance with the present invention a method for generating postage evidence includes providing addressee information separated into a plurality of address fields. A predetermined section of each address field, appropriate for authentication purposes, is selected to obtain selected address data. An error correction code is generated for the selected address data and a secure hash is generated of the selected address data. The secure hash is sent with postal data, including postage amount and date, to a digital token generation process that generates at least one digital token using the secure hash for evidencing postage. An indicia including the digital token and the postal data is generated and then printed on a mail piece with the error correction code and the addressee information. In a digital token verification process, the addressee information and the error correcting code are read from the mailpiece and the postal data is read from the indicia. An error correction algorithm is used to determine if errors are correctable. If correctable, a predetermined section of each address field is selected to obtain selected address data. A secure hash of the selected address data is generated and sent with the postal data to a digital token verification process.

The above and other objects and advantages of the present invention will be apparent upon consideration of the following detailed description, taken in conjunction with accompanying drawings, in which like reference characters refer to like parts throughout, and in which:
Fig. 1 is a block diagram of a PC-based metering system in which the present invention operates;
Fig. 2 is a schematic block diagram of the PC-based metering system of Fig. 1 including a removable vault card and a DLL in the PC;
Fig. 3 is a schematic block diagram of the DLL in the PC-based metering system of Fig. 1 including interaction with the vault to issue and store digital tokens;
Fig. 4 is a flow chart of the generation of evidence of postage in accordance with the present invention; and
Fig. 5 is a verification process in accordance with the present invention.

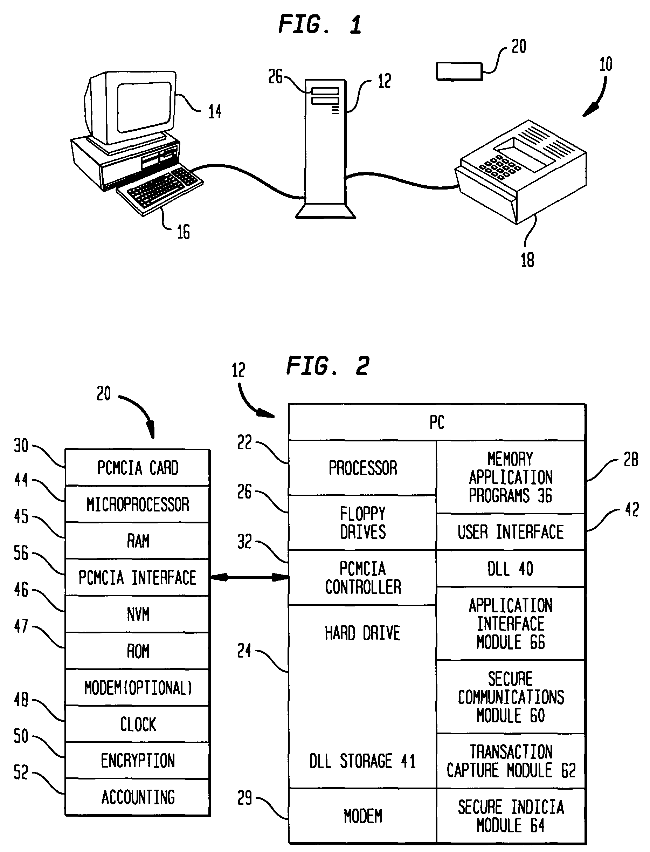

In describing the present invention, reference is made to the drawings, wherein there is seen in Figs. 1-3 an open system PC-based postage meter, also referred to herein as a PC meter system generally referred to as 10, in which the present invention performs the digital token process. PC meter system 10 includes a conventional personal computer configured to operate as a host to a removable metering device or electronic vault, generally referred to as 20, in which postage funds are stored. PC meter system 10 uses the personal computer and its printer to print postage on envelopes at the same time it prints a recipient's address or to print labels for pre-addressed return envelopes. As used herein, the term personal computer is used generically and refers to present and future microprocessing systems with at least one processor operatively coupled to user interface means, such as a display and keyboard, and storage media. The personal computer may be a workstation that is accessible by more than one user. It will be understood that although the preferred embodiment of the present invention is described with regard to a postage metering system, the present invention is applicable to any value metering system that includes a transaction evidencing.

The PC-based postage meter 10 includes a personal computer (PC) 12, a display 14, a keyboard 16, and an non-secured digital printer 18, preferably a laser or ink-jet printer. PC 12 includes a conventional processor 22, such as the 80486 and Pentium processors manufactured by Intel, and conventional hard drive 24, floppy drive(s) 26, and memory 28. Electronic vault 20, which is housed in a removable card, such as PCMCIA card 30, is a secure encryption device for postage funds management, digital token generation and traditional accounting functions. PC meter system 10 may also include an optional modem 29 which is located preferably in PC 12. Modem 29 may be used for communicating with a Postal Service or a postal authenticating vendor for recharging funds (debit or credit). In an alternate embodiment the modem may be located in PCMCIA card 30.

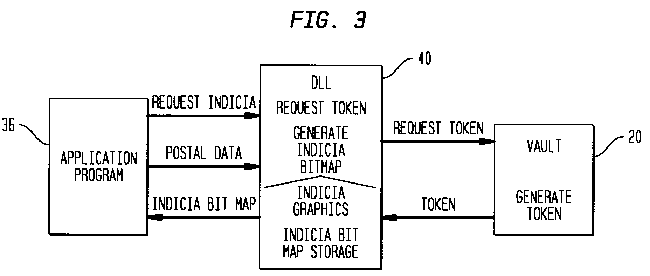

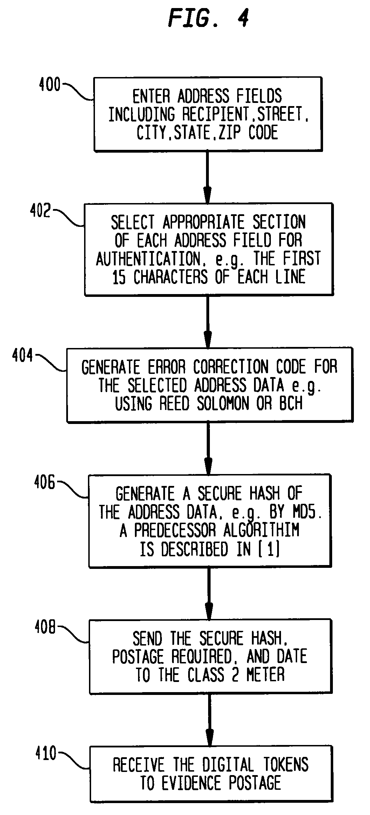

PC meter system 10 further includes a Windows-based PC software module 34 (Figs. 3 and 4) that is accessible from conventional Windows-based word processing, database and spreadsheet application programs 36. PC software module 34 includes a vault dynamic link library (DLL) 40, a user interface module 42, and a plurality of sub-modules that control the metering functions. DLL module 40 securely communicates with vault 20 and provides an open interface to Microsoft Windows-based application programs 36 through user interface module 42. DLL module 40 also securely stores an indicia image and a copy of the usage of postal funds of the vault. User interface module 42 provides application programs 36 access to an electronic indicia image from DLL module 40 for printing the postal revenue block on a document, such as an envelope or label. User interface module 42 also provides application programs the capability to initiate remote refills and to perform administrative functions.

PC-based meter system 10 operates as a conventional personal computer with attached printer that becomes a postage meter upon user request. Printer 18 prints all documents normally printed by a personal computer, including printing letters and addressing envelopes, and in accordance with the present invention, prints postage indicia.

The vault is housed in a PCMCIA I/O device, or card, 30 which is accessed through a PCMCIA controller 32 in PC 12. A PCMCIA card is a credit card size peripheral or adapter that conforms to the standard specification of the personal Computer Memory Card International Association. Referring now to Figs. 2 and 3, the PCMCIA card 30 includes a microprocessor 44, redundant non-volatile memory (NVM) 46, clock 48, an encryption module 50 and an accounting module 52. The vault includes an interface 56 that communicates with the host processor 22 through PCMCIA controller 32. The encryption module 50 may implement the NBS Data Encryption Standard (DES) or another suitable encryption scheme. In the preferred embodiment, encryption module 50 is a software module. It will be understood that encryption module 50 could also be a separator device, such as a separate chip connected to microprocessor 44. Accounting module 52 may be EEPROM that incorporates ascending and descending registers as well as postal data, such as origination ZIP Code, vendor identification, data identifying the PC-based postage meter 10, sequential piece count of the postal revenue block generated by the PC-based postage meter 10, postage amount and the date of submission to the Postal Service. As is known, an ascending register in a metering unit records the amount of postage that has been dispensed, i.e., issued by the vault, in all transactions and the descending register records the value, i.e., amount of postage, remaining in the metering unit, which value decreases as postage is issued.

The functionality of DLL 40 is a key component of PC-base meter 10. DLL 40 includes both executable code and data storage area 41 that is resident in hard drive 24 of PC 12. In a Windows environment, a vast majority of applications programs 36, such as word processing and spreadsheet programs, communicate with one another using one or more dynamic link libraries. PC-base meter 10 encapsulates all the processes involved in metering, and provides an open interface to vault 20 from all Windows-based applications capable of using a dynamic link library. Any application program 36 can communicate with vault microprocessor 44 in PCMCIA card 30 through DLL 40.

DLL 40 includes the following software sub-modules. Secure communications sub-module 80 controls communications between PC 12 and vault 20. Transaction captures sub-module 82 stores transaction records in PC 12. Secure indicia image creation and storage sub-module 84 generates an indicia bitmap image and stores the image for subsequent printing. Application interface sub-module 86 interfaces with non-metering application programs and issues requests for digital tokens in response to requests for indicia by the non-metering application programs. Detailed descriptions of PC meter system 10 and the digital token generation process are provided in related U.S. Patent Applications Serial Nos. [Attorney Docket E-421] and [Attorney Docket E-416] filed concurrently herewith, each of which is incorporated herein in its entirety by reference.

Since printer 18 is not dedicated to the metering function, issued digital tokens may be requested, calculated and stored in PC 12 for use at a later time when, at a user's discretion, corresponding indicia are generated and printed. Such delayed printing and batch processing is described in more detail in co-pending U.S. Patent Application Serial No. [Attorney Docket E-452], which is incorporated herein in its entirety by reference.

### Digital Token Generation Process

In accordance with the present invention, when a request for digital token is received from PC 12, vault 20 calculates and issues at least one digital token to PC 12 in response to the request. The issued digital token is stored as part of a transaction record in PC 12 for printing at a later time. In the preferred embodiment of the present invention, the transaction record is stored in a hidden file in DLL storage area 41 on hard drive 24. Each transaction record is indexed in the hidden file according to addressee information. It has been discovered that this method of issuing and storing digital tokens provides an additional benefit that one or more digital tokens can be reissued whenever a token has not been printed or if a problem has occurred preventing a printing of an indicia with the token.

By storing digital tokens as part of transaction records in PC 12 the digital tokens can be accessed at a later time for the generation and printing of indicia which is done in PC 12. Furthermore, if a digital token is lost, i.e., not properly printed on a mailpiece, the digital token can be reissued from DLL 40 rather than from vault 20. The storage of transaction records that include vault status at the end of each transaction provides a backup to the vault with regard to accounting information as well as a record of issued tokens. The number of transaction records stored on hard drive 24 may be limited to a predetermined number, preferably including all transactions since the last refill of vault 20.

### Postage Evidence Generation and Verification

Referring now to Fig. 4, the process for generating postage evidence for a mailpiece is described. At 400, delivery address fields, including recipient, street, city, state and zip code, are entered through keyboard 16 into PC 12. At 402, a predetermined appropriate section of each address field, for example, the first fifteen characters of each line, is selected for authentication. An error correcting code is generated, at 404, for the selected address data using, for example, Reed Solomon or BCH algorithms. At 406, a secure hash of the address data using, for example, the MD5 message-digest algorithm which is described in a paper "The MD5 Message-Digest Algorithm" by R. Rivest for MIT Laboratory for Computer Science and RSA Data Security in April 1992. PC 12, at 408, sends the secure hash, postage required and date with a request for digital token to vault 20. At 410, PC 12 receives the digital token from vault 20. PC 12 then generates an indicia as previously described. The error correcting code is printed on the mailpieces in alphanumeric characters or barcode format.

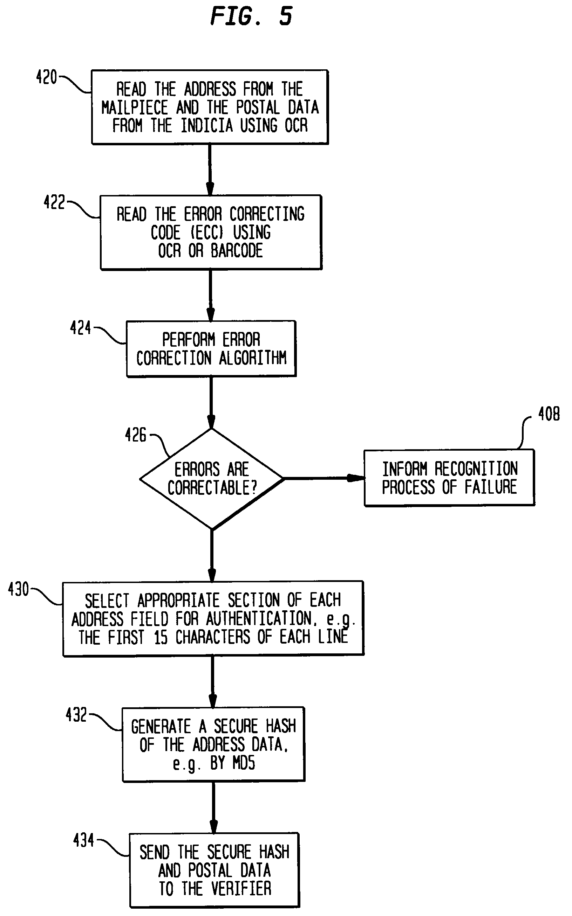

Referring now to Fig. 5, at 420 an OCR reads the delivery address from the mailpiece and the postal data from the indicia. At 422, using an OCR or barcode reader, the error correcting code is read. An error correction algorithm is performed, at 424, using the error correcting code. If errors are not correctable at 426, then the recognition process is notified of a failure at 428. If correctable, at 430 the appropriate section of each address field, as at 402, is selected for authentication. At 432, a secure hash of the selected address data is generated using the same algorithm as at 406. The secure hash and the postal data are sent to the verifier, at 434, which generates digital tokens that are compared to the digital tokens printed on the mailpiece to complete the verification.

The present invention provides several benefits for the open system digital token generation process, including the improvement of the rate of correct reading of the delivery address during the verification process.

It will be understood that the present invention is not limited to addressee information or to an open postage metering system. The present invention applies to any transaction evidencing system in which a block of information is used to authenticate a document and the information is later scanned from the document in the verification process.

### Batch Processing

The present invention is suitable for generating a batch of tokens for addresses in a mailing list rather than entering such list of addressees one at a time. The batch of tokens are part of a batch of transaction records, that are indexed in the transaction file in the DLL storage area 41, which are later used to generate indicia images when printing envelopes for the mailing list. Such batch processing would be useful, for example, to production mailers which often have databases of addresses from which to generate mail. These databases are usually pre-processed and sorted to take advantage of postal discounts and recipient profiles for direct marketing opportunities.

In an alternate embodiment, a PC-based open metering system is part of a network with the vault connected to a server PC and the user requesting postage from a user PC. The token generation process would proceed as previously described except that the vault functions, including token generation, would occur in the server PC or the vault card connected thereto. The server PC also stores a record of all transactions for backup and disaster recovery purposes. The user PC would store the transaction records, including issued tokens, on its hard drive and would generate indicia corresponding thereto. This configuration would allow multiple users to send a letter to the same addressee without the token generation being inhibited.

While the present invention has been disclosed and described with reference to a single embodiment thereof, it will be apparent, as noted above that variations and modifications may be made therein. It is, thus, intended in the following claims to cover each variation and modification that falls within the true spirit and scope of the present invention.

In the foregoing, the following attorney docket references indicate the US-applications shown in the following table. All these applications have corresponding European Applications and are hereby incorporated herein by reference:
- E-415: Serial No. 08/575,106
- E-416: Serial No. 08/575,107
- E-417: Serial No. 08/574,746
- E-418: Serial No. 08/574,745
- E-419: Serial No. 08/575,110
- E-420: Serial No. 08/574,743
- E-421: Serial No. 08/575,112
- E-444: Serial No. 08/575,109
- E-452: Serial No. 08/575,104
- E-463: Serial No. 08/574,749
- E-466: Serial No. 08/575,111
- E-462: Serial No. 08/588,499

## Claims

1. A method for verifying postage evidencing in an open metering system, the method comprising the steps of:
generating at an open metering system an error correction code for selected sections of a destination address;
generating a first secure hash of the selected sections of the destination address;
generating at least one digital token using the first secure hash, postage amount and date;
generating an indicia including the digital token and postal data corresponding to the destination address;
printing the indicia, the destination address and the error correction code on a mailpiece;
receiving the mailpiece for verification of postage evidencing;
reading the error correction code printed on the mailpiece and the postal data from the indicia using an optical character reader;
performing an error correction algorithm on the error correction code to determine if errors are correctable;
if correctable, generating a second secure hash of the selected sections of the destination address;
verifying the postage evidencing on the mailpiece from the second secure hash and the postal data read from the mailpiece.

2. A method for authenticating postage evidencing, the method comprising the steps of:
providing addressee information separated into a plurality of address fields;
selecting a predetermined section of each address field to obtain selected address data, each section being appropriate for authentication purposes;
generating an error correction code for the selected address data;
generating a first secure hash of the selected address data;
sending the first secure hash and postal data, including postage amount and date, to a digital token generation process;
generating at least one digital token using the first secure hash for evidencing postage;
generating an indicia including the digital token and the postal data; and
printing the indicia, the addressee information, and the error correction code on a mail piece.

3. The method of claim 1 comprising the further steps of:
reading the addressee information from the mailpiece and the postal data from the indicia;
reading the error correcting code;
performing an error correction algorithm to determine if errors are correctable;
if correctable, selecting a predetermined section of each address field to obtain selected address data, each section being appropriate for authentication purposes;
generating a second secure hash of the selected address data; and
verifying the postage evidencing using the second secure hash and the postal data.

4. The method of claim 3 comprising the further step of:
informing a recognition process of a failure whenever errors are not correctable.
